# EUROPEAN PATENT SPECIFICATION

(11) **EP 4 474 726 B1**
(45) Date of publication and mention of the grant of the patent: **24.09.2025**
(21) Application number: 24382542.9
(22) Date of filing: 22.05.2024
(51) Int. Cl.: F24S 20/50, H02S 10/40, H02S 20/30, H02S 30/20, F24S 25/00

(54) **JOINING SYSTEM FOR SOLAR PANELS**
VERBINDUNGSSYSTEM FÜR SOLARPANEELE
SYSTÈME D'ASSEMBLAGE POUR PANNEAUX SOLAIRES

(30) Priority: 24.05.2023 ES 202330894 U
(43) Date of publication of application: 11.12.2024
(73) Proprietor: NOMAD SOLAR ENERGY, S.L., 28008 Madrid (ES)
(72) Inventor: Jourdain de Thieulloy, Laurent J.B. Marie Bruno, 27300 Saint-Léger-de-Rôtes (FR)
(74) Representative: Isern Patentes y Marcas S.L.

(56) References cited:
- WO-A1-2020/229783
- CH-A2- 712 535
- CN-A- 109 510 571
- US-A1- 2013 186 450

## Description

### OBJECT OF THE INVENTION

The object of the present invention, as established by the title of the invention, is a joining system for solar panels, which allows solar panels to be joined at a variable angle in a minimum amount of space. It is an innovation that provides previously unknown advantages in current techniques.

The present invention is characterised by the special functional and constructive features of the elements that form the device so that all of them contribute to achieving a joining system for solar panels, which joins solar panels at a variable angle that uses the axle of the hinge as an axle for a removable wheel as a support.

### TECHNICAL FIELD

Therefore, the present invention falls within the scope of devices for generating electricity from renewable sources, and particularly among those for generating by means of a solar source.

### BACKGROUND OF THE INVENTION

As a reference to the current state of the art, it should be noted that although different deployable solar panel designs are known, the existence of any other that presents structural and constitutive technical features that are equal or similar to those presented by the invention claimed herein is unknown. Document US2013/186450A1 discloses an example of a joining system for solar panels.

### DESCRIPTION OF THE INVENTION

Current deployable solar panels require guides or rails in order to be deployed, thereby making it difficult for them to be portable elements and requiring a more expensive installation.

The object of the invention is a joining system for solar panels that does not require rails or guides to extend deployable panels.

Specifically, the invention proposes a joint that comprises a hinge comprising fixing elements, each located in the structure of each solar panel to be joined, articulated by an axle comprising a separable wheel. This enables the solar panels to be deployed while the wheel rolls along the surface without the need for prior installations.

This favours the portability and reorientation of the solar panels, as they are not conditioned by fixed structures and the wheels are separable from the axle, enabling the folded assembly to take up less space, optimising resources.

Furthermore, the joining system for solar panels includes limiting means for limiting the opening of the solar panels, to prevent them from extending completely and to configure the optimal opening angle thereof.

Likewise, the joining system for solar panels comprises a plurality of counterweights, configured to balance the structure.

Except when indicated otherwise, all of the technical and scientific elements used in this specification have the meaning commonly understood by a person with average skill in the art to which this invention belongs. When this invention is put into practice, methods and materials may be used that are similar or equivalent to the ones described in the specification.

### BRIEF DESCRIPTION OF THE DRAWINGS

To complete the description provided herein, and for the purpose of helping to make the features of the invention more readily understandable, this description is accompanied by figures constituting an integral part of the same, which by way of illustration and not limitation represents the following:

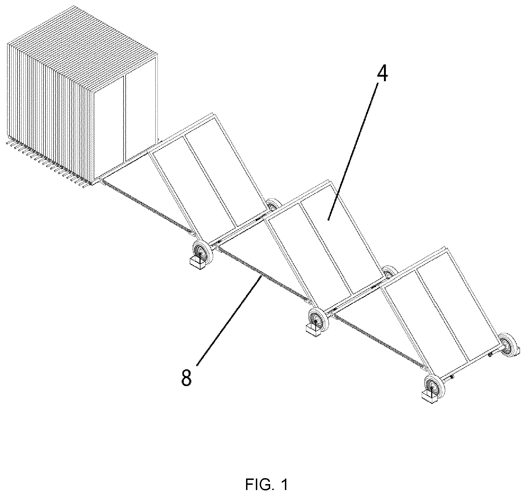

Figure 1 is a perspective representation of the joining system for solar panels with several extended solar panels (4).

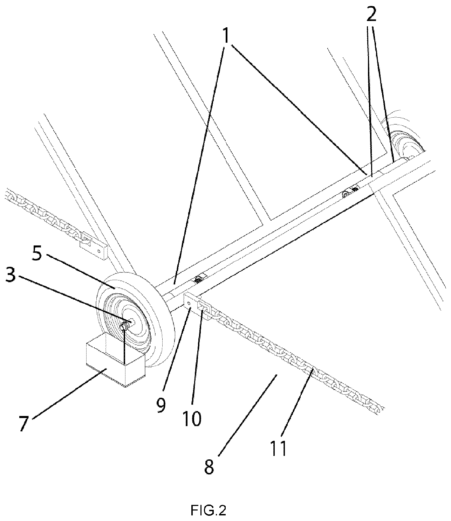

Figure 2 is a detailed perspective representation of the joining system for solar panels with the extended solar panels (4).

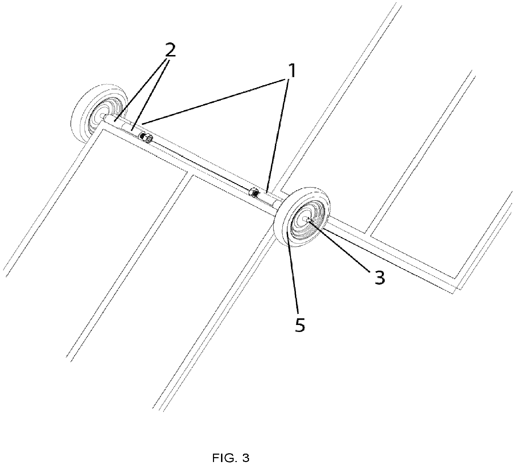

Figure 3 is a detailed perspective representation of the joining system for solar panels, seen from the bottom with the extended solar panels (4).

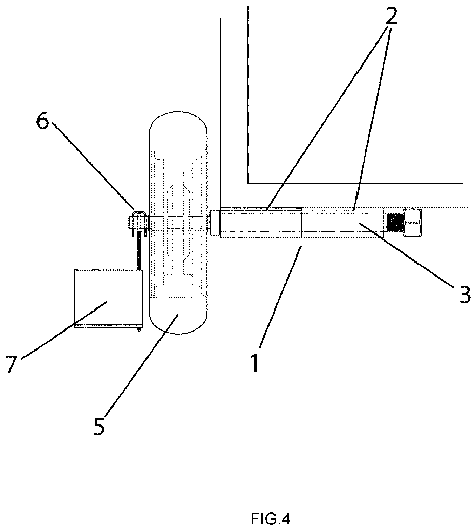

Figure 4 is a detailed side representation of the joining system for solar panels.

### PREFERRED EMBODIMENT OF THE INVENTION

In view of the figures, a preferred, although non-limiting, embodiment of the proposed invention is described below, which consists of a joining system for solar panels.

As shown in the figures, the joining system for solar panels comprises at least one hinge (1) comprising at least two fixing elements (2) articulated by a common axle (3) that join two separate surfaces comprising different solar panels (4), which axle (3) protrudes from the fixing elements (2) and is configured to house a wheel (5) or roller, removable from said axle (3).

In a complementary manner, the axle (3) comprises locking means (6) configured to prevent the wheel (5) from accidentally separating from the axle (3), and the axle (3) also comprises a counterweight (7).

Furthermore, the joining system for solar panels comprises limiting means (8) for limiting the opening of the solar panels (4) that comprises a support (9) comprising fixing means (10) for fixing a flexible limiting element (11) configured to limit the opening of the solar panels (4) depending on their length.

Having sufficiently described the nature of the present invention, as well as the ways of implementing it, it is not considered necessary to extend its explanation for any person skilled in the state of the art to understand its scope and the advantages which derive from it, specifying that, within its essential nature, it can be carried out in other embodiments that differ in detail from the one provided by way of example, and which are also covered by the requested protection, provided that they do not alter, change or modify its fundamental principle.

## Claims

1. A joining system for solar panels, which allows solar panels to be joined at a certain angle, **characterised in that** it comprises at least one hinge (1) comprising at least two fixing elements (2) articulated by a common axle (3) that join two separate surfaces comprising different solar panels (4), which axle (3) protrudes from the fixing elements (2) and is configured to house a wheel (5) or roller, removable from said axle (3).

2. The joining system for solar panels, according to the preceding claim, **characterised in that** the axle (3) comprises locking means (6) configured to prevent the wheel (5) from separating from the axle (3).

3. The joining system for solar panels, according to any of the preceding claims, **characterised in that** the axle (3) comprises a counterweight (7).

4. The joining system for solar panels, according to any of the preceding claims, **characterised in that** it comprises limiting means (8) for limiting the opening of the solar panels (4), which comprises a support (9) comprising fixing means (10) for fixing a limiting element (11).

## Patentansprüche

1. Verbindungssystem für Solarpaneele, das es ermöglicht, Solarpaneele in einem bestimmten Winkel zu verbinden, **dadurch gekennzeichnet, dass** es mindestens ein Scharnier (1) mit mindestens zwei Befestigungselementen (2) umfasst, die durch eine gemeinsame Achse (3) gelenkig miteinander verbunden sind und die zwei getrennte Flächen verbinden, die verschiedene Solarpaneele (4) umfassen, wobei die Achse (3) über die Befestigungselemente (2) vorsteht und so ausgebildet ist, dass sie ein Rad (5) oder eine Rolle aufnimmt, das bzw. die von der Achse (3) abnehmbar ist.

2. Verbindungssystem für Sonnenpaneele nach dem vorhergehenden Anspruch, **dadurch gekennzeichnet, dass** die Achse (3) Verriegelungsmittel (6) umfasst, die ausgebildet sind, um zu verhindern, dass sich das Rad (5) von der Achse (3) löst.

3. Verbindungssystem für Solarpaneele nach einem der vorhergehenden Ansprüche, **dadurch gekennzeichnet, dass** die Achse (3) ein Gegengewicht (7) aufweist.

4. Verbindungssystem für Solarpaneele nach einem der vorhergehenden Ansprüche, **dadurch gekennzeichnet, dass** es Begrenzungsmittel (8) zur Begrenzung der Öffnung der Solarpaneele (4) umfasst, die einen Träger (9) mit Befestigungsmitteln (10) zur Befestigung eines Begrenzungselements (11) umfassen.

## Revendications

1. Système d'assemblage pour panneaux solaires, qui permet à des panneaux solaires d'être assemblés selon un certain angle, **caractérisé en ce qu'**il comprend au moins une charnière (1) comprenant au moins deux éléments de fixation (2) articulés par un axe commun (3) qui assemblent deux surfaces séparées comprenant des panneaux solaires différents (4), lequel axe (3) fait saillie à partir des éléments de fixation (2) et est conçu pour loger une roue (5) ou un rouleau, amovible dudit axe (3).

2. Système d'assemblage pour panneaux solaires, selon la revendication précédente, **caractérisé en ce que** l'axe (3) comprend un moyen de verrouillage (6) conçu pour empêcher la roue (5) de se séparer de l'axe (3).

3. Système d'assemblage pour panneaux solaires, selon l'une quelconque des revendications précédentes, **caractérisé en ce que** l'axe (3) comprend un contrepoids (7).

4. Système d'assemblage pour panneaux solaires, selon l'une quelconque des revendications précédentes, **caractérisé en ce qu'**il comprend un moyen de limitation (8) pour limiter l'ouverture des panneaux solaires (4), qui comprend un support (9) comprenant un moyen de fixation (10) pour fixer un élément de limitation (11).
